(19) Europäisches Patentamt

European Patent Office

Office européen des brevets

(11) Publication number: **0 243 549 B1**

(12) **EUROPEAN PATENT SPECIFICATION**

(45) Date of publication of patent specification :
27.03.91 Bulletin 91/13

(51) Int. Cl.⁵ : **F16L 55/16**

(21) Application number : **86305259.3**

(22) Date of filing : **08.07.86**

(54) Leak sealing.

(30) Priority : **29.04.86 GB 8610508**

(43) Date of publication of application :
**04.11.87 Bulletin 87/45**

(45) Publication of the grant of the patent :
**27.03.91 Bulletin 91/13**

(84) Designated Contracting States :
**AT BE CH DE FR IT LI LU NL SE**

(56) References cited :
**DE-A- 3 100 565**
**DE-A- 3 334 836**
**FR-A- 2 246 804**

(56) References cited :
**US-A- 3 467 141**
**US-A- 3 550 638**
**US-A- 4 049 296**
**US-A- 4 323 526**
**US-A- 4 568 091**

(73) Proprietor : **Furmanite International Limited**
**Furman House Shap Road**
**Kendal Cumbria LA9 6RU (GB)**

(72) Inventor : **Richardson, Arthur William**
**12 Hayfell Avenue**
**Kendal Cumbria (GB)**

(74) Representative : **Lyons, Andrew John et al**
**ROYSTONS 531 Tower Building Water Street**
**Liverpool L3 1BA (GB)**

EP 0 243 549 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention concerns leak sealing and, in particular, packing seals for leak sealing clamps suitable for on line leak sealing.

Pipeline leaks can occur in several places, such as between flange connections of pipeline ends, between a valve body and a bonnet flange on the pipeline and in the pipeline itself, say in a welded connection. Leak sealing clamps usually made of steel have been used for many years to seal such leaks. Various means have been used for forming a seal between the steel clamps and the flanges or pipelines to which they have been fitted. These means usually involve the use of a flexible metallic or non-metallic seal deformed by compression by the action of clamping bolts or by pipeline pressure (see for example US-A-3467141) or the use of fluid plastic scaling material (US-A-4323526) but have not been entirely satisfactory.

The object of this invention is to provide means suitable for sealing between sealing clamps and flanges or pipes, particularly when hot.

According to the present invention there is provided a method of sealing leaks in a pipeline or a pipeline joint using a sealing clamp having packing seals which fit by compression between the clamp and a pipeline or flange, characterised in that the packing seals are pre-impregnated with a thermosetting resin capable of bonding the packing seals both to the clamp and to the pipeline or flange upon heating.

The preferred packing seals comprise woven or plaited mineral or synthetic fibrous materials impregnated with a thermosetting resin, particularly one that sets at high temperatures. Examples of suitable fibrous materials for making the packing seals of the invention include asbestos, carbon fibres and aramid fibres. Examples of suitable thermosetting resins include epoxides, esters, furanes, phenolic and urea formaldehyde resins. The preferred packing seal can, therefore, be compressed and the resin can bond it to metal surfaces. Furthermore, the preferred packing seals can be used on hot pipelines, whereby the resin will be set by heat from the pipeline.

To compress the packing seals any suitable means may be used. One preferred means may be by injection of a sealant to compress the seal against a surface. Alternatively, mechanical means may be used and this could possibly be more useful when the surface onto which the seal is being compressed is uneven. For this, the packing seals could be mounted on piston-like members, such as piston rings, with means for urging the piston-like members in a desired direction.

Sealing clamps are usually provided as two halves clamped together by bolts through lugs thereof and to accommodate packing seals according to the invention annular grooves may be provided in the inner face of the clamp. Two or more grooves will be provided for packing seals on each side of the leak. Preferably two pairs of packing seals will be provided.

The sealing clamp may be provided with various ports for injection of sealant and/or pressure relief. Injection ports may be provided for compressing the packing seals by means of sealant unless mechanical compression is to be used. Where pairs of packing seals are used injection ports may be provided for injecting sealant between the seals of each pair and ports may be provided for pressure relief from a leaking pipeline or flange connection and then for injection of sealant into the leak itself. The latter ports will usually be centrally located so that one or more can be used for accurately locating a sealing clamp onto a pair of flanges by means of a peg through the port to locate in a space between the flanges.

The adjoining faces of connecting lugs of the sealing clamps may be provided with channels or grooves for sealant and those channels or grooves will be open to a source of sealant, say from between the seals of each pair of packing seals.

The sealing clamps envisaged herein may also have caulking lips for deformation to meet any uneven contact with or out-of-roundness the pipeline or flanges thereof.

Further features and advantages of the invention will be apparent from the following exemplary description with reference to the accompanying drawings, in which :

Figure 1 shows a flanged pipeline connection with a leak sealing ring clamp partly cutaway ;

Figure 2 is a side view of the pipeline connection of Figure 1 with one half of the leak sealing ring clamp in place ;

Figure 3 is a part-section through a pipeline flange connection with a leak sealing ring clamp suitable where the pipeline flanges are misaligned ; and

Figure 4 shows a welded pipeline connection with a leak sealing box clamp partly cutaway.

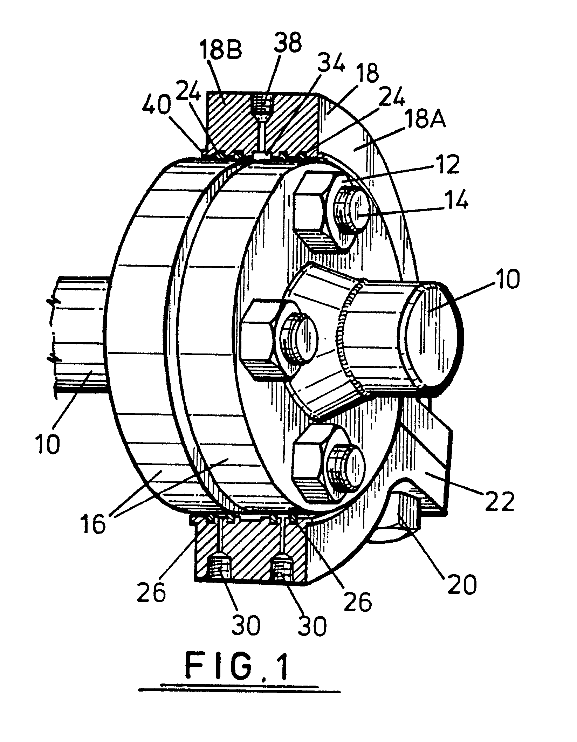

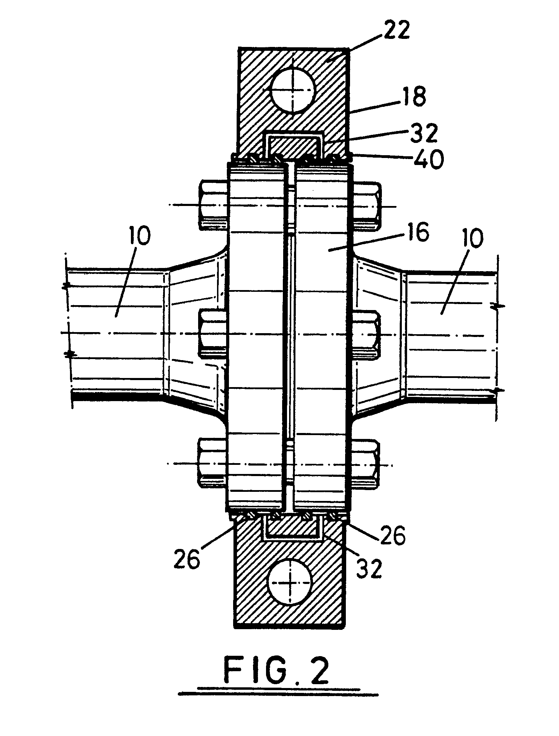

Referring to Figures 1 and 2, a pair of pipes 10 connected by nuts and bolts 12 and 14 respectively through holes in facing flanged ends 16 of the pipes 10. For the purpose of sealing a leak from the flanged connection, a steel clamp ring 18 is fitted about the flanges 16. (The method of fitting will be described later). The clamp ring 18 is in two halves 18A, 18B corrected by lug bolts 20 through lugs 22 of each ring half.

The clamp ring halves 18A, 18B each have two pairs of annular grooves 24 in their surfaces facing the flanges 16. These annular grooves 24 receive packing seals 26 of woven mineral or synthetic fibre impregnated with a thermosetting resin. Access to the rear of the annular grooves 24 is provided by ports (not shown) through the clamp ring whereby sealant can be injected to force the packing seals 26 onto the flanges 16 and to improve the seal between the packing seals and the clamp ring. This may be particularly important should there be axial misalignment between the flanges or areas of corrosion of the flange surfaces resulting in out-of-roundness.

The clamp ring 18 has further ports 30 for access between the packing seals of each pair, whereby sealant may be injected. In addition at the faces of lugs 22 are provided with a groove or channel 32 linking the spaces between the pairs of packing seals, whereby sealant injected via the ports 30 can also provide a seal between the adjoining lugs 22.

The clamp ring also has a central annular channel 34 with further ports 38 giving access thereto for injection of sealant or to act as pressure relief ports. Thus, while the clamp ring is being fitted and sealed, pipeline fluid can continue to leak to avoid a build up of pressure. The ports 38 may also be used for accurate location of the clamp ring on the flange using dowels through one or more ports to locate in the space between the flanges.

Finally, the clamp ring 18 has a caulking lip 40 on each side which can be deformed by hammer blows onto the flange surface to prevent egress of sealant, say in an area of corrosion, if necessary.

The clamp ring 18 is particularly suitable for on line sealing leaks in flange connections of pipelines, wherein the substance in the pipeline is hot. This will be apparent from the following exemplary prodecure for fitting the clamp ring 18 to the flanges 16.

Firstly, the outside diameter of the flanges 16 is accurately measured and the ring clamp inside diameter machined to a slightly larger size. The packing seals of woven mineral or synthetic fibre impregnated with high temperature thermosetting resin are then pressed into each of the annular grooves 24 leaving some of the packing proud of the surface of the ring. At each end of the ring halves the packing seal is cut flush therewith.

The clamp ring halves 18A, B are then fitted onto the flange using a dowel through one of the ports 38 for accurate location, the dowel locating in the space between the flanges. The lug bolts 20 are then fitted and used to draw the two ring halves 18A, B into engagement applying a compressive loading to the abutting faces of the lugs.

Thermosetting sealant is next injected into the ports leading to the annular grooves 24 so forcing the packing seals into compressive contact with the flanges. This compensates for any misalignment or surface irregularities of the flanges. Sealant is then injected into the space between each pair of annular grooves 24 via the ports 30 as well as into the channels 32. This sealant is maintained under pressure while heat from the pipeline causes the packing seals to bond both to the flanges and to the clamp ring. After bonding the location dowel is removed.

A suitable leak sealing compound is then injected into the central exhaust ports 38 to finally seal the leak or indeed any other suitable leak sealing process may be used that may be independent of the clamp ring.

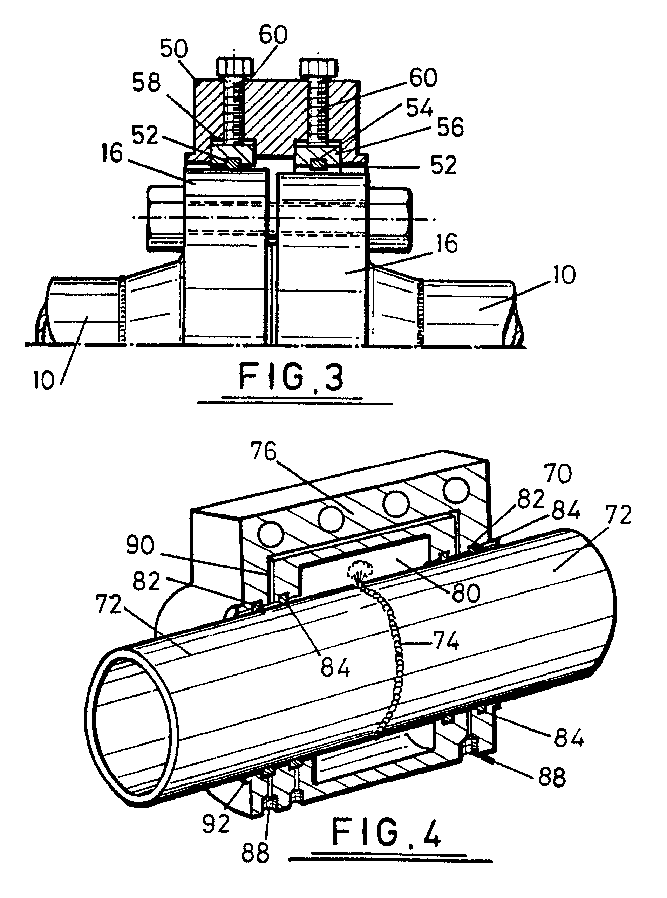

Turning to Figure 3, the clamp ring 50 here shown is especially intended for use when pipeline flanges are misaligned.

The clamp ring 50 based on that of Figures 1 and 2 and so similar features have been given the same reference numerals for simplicity. The clamp ring is again in two halves connected by lug bolts through lugs thereof. However, it has only two packing seals 52. The packing seals 52 are of woven mineral or synthetic fibre impregnated with thermosetting resin and are in annular grooves 54 of piston rings 56 themselves in annular grooves 58 of the clamp ring. The piston rings 56 are connected to screws 60 radially disposed about the clamp ring 50 whereby the packing seals can be forced into engagement with the flanges 16.

Finally in Figure 4 a leak sealing box clamp 70 is shown fitted to a pipeline 72 leaking at a welded connection 74 therein. The box clamp 70 is in two halves only one of which is shown and that partially cutaway to reveal features of the clamp. The two halves have lugs 76 connected by lug bolts (not shown) and are relieved centrally at 80. The box clamp will be positioned over the pipeline with the leak more or less centrally provided that the areas of the pipeline to each side of the leak are not defective. The size of the central relieving may give sufficient latitude for positioning of the box to avoid having to seal on defective areas of the pipeline.

To each side of the area 80 the box clamp has a pair of annular grooves 82 in which are packing seals 84. Ports 86 give access to the grooves 82 for injection of sealant to force the seals 84 onto the pipeline and to the seal between the packing seals and the annular grooves.

Further injection ports 88 are provided for injecting sealant into the spaces between the seal 84 of each pair and channels 90 linking these spaces. The ends of the box clamp 70 are provided with a caulking tip 92.

The fitting process for the box clamp 70 is basically the same as for the clamp ring of Figure 1 and 2 except that the final injections of sealant is not required.

## Claims

1. A method of sealing leaks in a pipeline or a pipeline joint using a sealing clamp having packing seals which fit by compression between the clamp and a pipeline or flange, characterised in that the packing seals are pre-impregnated with a thermosetting resin capable of bonding the packing seals both to the clamp and to the pipeline or flange upon heating.

2. A method as claimed in claim 1, characterised in that the packing seals comprise woven or plaited mineral or synthetic fibre impregnated with a thermosetting resin.

3. A method as claimed in claim 1 or claim 2, characterised in that the seals are heated by hot pipeline contents.

4. A method as claimed in claim 1 or claim 2, characterised in that the seals are heated by external means.

5. A packing seal for use in a method claimed in any of claims 1 to 4, characterised in that it comprises woven or plaited mineral or synthetic fibre impregnated with a thermosetting resin.

## Ansprüche

1. Verfahren zum Abdichten von Lecks in einer Rohrleitung oder einer Rohrverbindung vermittels einer Dichtungsklemmvorrichtung, die Dichtpackungen besitzt, welche durch Druck zwischen der Klemmvorrichtung und einer Rohrleitung oder einem Flansch festsitzen, dadurch gekennzeichnet, daß die Dichtpackungen mit einem wärmehärtenden kunstharz vorbehandelt werden, welches durch Erwärmen die Dichtpackungen sowohl mit der Klemmvorrichtung als auch mit der Rohrleitung oder dem Flansch verbindet.

2. Verfahren nach Anspruch 1, dadurch gekennzeichnet, daß die Dichtpackungen gewebte oder geflochtene, mineralische oder synthetische Fasern enthalten, welche mit einem wärmehärtenden Kunstharz imprägniert sind.

3. Verfahren nach Anspruch 1 oder 2, dadurch gekennzeichnet, daß die Dichtungen durch den heißen Inhalt der Rohrleitungen erhitzt werden.

4. Verfahren nach Anspruch 1 oder 2, dadurch gekennzeichnet, daß die Dichtungen durch äußere Mittel erhitzt werden.

5. Dichtpackung zur Anwendung in einem Verfahren nach den Ansprüchen 1-4, dadurch gekennzeichnet, daß es gewebte oder geflochtene, mineralische oder synthetische, mit einem wärmehärtenden Kunstharz imprägnierte Fasern besitzt.

## Revendications

1. Procédé pour étancher les fuites d'un pipeline ou d'un joint de pipeline en utilisant un collier d'étanchéité muni de garnitures d'étanchéité qui s'adaptent par compression entre le collier et un pipeline ou une bride, caractérisé en ce que les garnitures d'étanchéité sont préimprégnées d'une résine thermodurcissable capable de lier les garnitures d'étanchéité à la fois au collier et au pipeline ou à la bride quand elle est chauffée.

2. Procédé tel que revendiqué dans la revendication 1, caractérisé en ce que les garnitures d'étanchéité comprennent des fibres minérales ou synthétiques tissées ou tressées, imprégnées d'une résine thermodurcissable.

3. Procédé tel que revendiqué dans la revendication 1 ou la revendication 2, caractérisé en ce que les garnitures sont chauffées par le contenu chaud du pipeline.

4. Procédé tel que revendiqué dans la revendication 1 ou la revendication 2, caractérisé en ce que les garnitures sont chauffées par des moyens extérieurs.

5. Garniture d'étanchéité pour utilisation dans un procédé tel que revendiqué dans l'une quelconque des revendications 1 à 4, caractérisée en ce qu'elle comprend des fibres minérales ou synthétiques tissées ou tressées, imprégnées d'une résine thermodurcissable.

18B 38 34 18
40 24 24
18A
12
14
10
10
16
26 26
20
22
26 26
30 30

FIG.1

# FIG. 2

FIG. 3

FIG. 4

7